# EUROPEAN PATENT APPLICATION

(11) **EP 3 733 268 A1**
(43) Date of publication of application: **04.11.2020**
(21) Application number: 18895600.7
(22) Date of filing: 27.12.2018
(51) Int. Cl.: B01D 63/00, C02F 1/44

(54) **WATER-TREATMENT FLOW-PATH MEMBER**

(30) Priority: 28.12.2017 JP 2017253965
(71) Applicant: Kitagawa Industries Co., Ltd., Inazawa-shi, Aichi 492-8446 (JP); Shinshu University, Matsumoto City, Nagano 390-8621 (JP)
(72) Inventor: KITANO, Hiroki, Kasugai-shi, Aichi 480-0303 (JP); YAMAGUCHI, Akio, Kasugai-shi, Aichi 480-0303 (JP); ENDO, Morinobu, Nagano City, Nagano 380-8553 (JP); CRUZ SILVA, Rodolfo, Nagano City, Nagano 380-8553 (JP)
(74) Representative: Müller-Boré & Partner Patentanwälte PartG mbB
(86) International application number: PCT/JP2018/048261
(87) International publication number: WO 2019/131917

(57) **Abstract**

Provided is a water treatment flow channel member in which the occurrence of fouling is suppressed. A water treatment flow channel member 1 of the present invention is formed from a molded product containing a synthetic resin and a nanocarbon material.

## Description

### Technical Field

The present invention relates to a water treatment flow channel member.

### Background Art

Membrane separation devices have been used for purposes such as desalinating seawater and brine, and purifying domestic and industrial wastewater (for example, see Patent Documents 1 to 3). This type of membrane separation device is provided with a treatment membrane such as a microfiltration membrane (hereinafter, MF membrane), an ultrafiltration membrane (hereinafter, UF membrane), a nanofiltration membrane (hereinafter, NF membrane), and a reverse osmosis membrane (hereinafter, RO membrane). When raw water such as wastewater is introduced to one side of such a treatment membrane, a solvent such as water permeates to the opposite side of the treatment membrane due to a transmembrane differential pressure, and a permeate from which impurities have been separated is obtained.

The membrane separation device is typically provided with a plurality of treatment membranes for purposes such as improving the efficiency of water treatment. These treatment membranes are laminated to each other through a raw water spacer that is made from resin and has a mesh structure.

### Citation List

### Patent Document

Patent Document 1: Japanese Unexamined Patent Application Publication No. H10-323545A
Patent Document 2: Japanese Unexamined Patent Application Publication No. 2012-518538A
Patent Document 3: Japanese Unexamined Patent Application Publication No. 2014-8430A

### Technical Problem

Raw water to be treated such as seawater or wastewater generally includes components such as organic components (for example, proteins, polysaccharides, and humic acids), inorganic components (ions or salts such as calcium ions and sodium ions), or organic-inorganic composite components. Therefore, when a membrane separation device like that described above is used over an extended period of time, a phenomenon (so-called fouling) occurs in which organic components, inorganic components, and the like adhere and deposit around the raw water spacers.

When such fouling occurs, the flow resistance of the treatment water (raw water or the like) flowing in the membrane separation device increases, and therefore the load of the pump (supply pump) for supplying the raw water to the membrane separation device increases. In addition, when fouling occurs, the treatment membrane may also become contaminated with fouling substances such as organic components, which may reduce the membrane performance.

Therefore, in order to suppress fouling in this type of membrane separation device, a water treatment flow channel member such as a raw water spacer needs to be cleaned periodically with chemical cleaning or the like, and the cost and effort required for such maintenance management has become a significant problem. In addition, when cleaning a water treatment flow channel member such as a raw water spacer, there is also a risk of damaging the treatment membrane.

### Summary of Invention

Thus, an object of the present invention is to provide a water treatment flow channel member in which the occurrence of fouling is suppressed.

### Solution to Problem

A solution to the above problems is as follows. That is,
<1> A water treatment flow channel member including a molded product containing a synthetic resin and a nanocarbon material.
<2> The water treatment flow channel member according to <1>, wherein the nanocarbon material includes carbon nanotubes.
<3> The water treatment flow channel member according to <1> or <2>, wherein the synthetic resin includes a thermoplastic resin.
<4> The water treatment flow channel member according to <3>, wherein the thermoplastic resin includes polypropylene.
<5> The water treatment flow channel member according to any one of <1> to <4> described above, wherein a blending ratio of the nanocarbon material is from 1 to 30 parts by mass per 100 parts by mass of the synthetic resin.

### Advantageous Effects of Invention

According to the present invention, a water treatment flow channel member in which the occurrence of fouling is suppressed can be provided.

### Brief Description of Drawings

FIG. 1 is an image illustrating a photograph of spacers of Example 1 and Comparative Example 1.
FIG. 2 illustrates magnified photographs and cross-sectional photographs of a mesh portion of the spacers of Example 1 and Comparative Example 1.
FIG. 3 illustrates the results (fluorescence photomicrographs) of an immersion test of Example 1.
FIG. 4 illustrates the results (fluorescence photomicrographs) of the immersion test of Comparative Example 1.
FIG. 5 is a graph showing the relationship between time and fluorescence intensity analyzed on the basis of the results of the fluorescence photomicrographs of Example 1 and the results of the fluorescence photomicrographs of Comparative Example 1.
FIG. 6 illustrates magnified photographs and cross-sectional photographs of a mesh portion of the spacers of Example 2 and Comparative Example 2.
FIG. 7 is a schematic view of a cross-flow filtration type testing apparatus.
FIG. 8 illustrates the results (fluorescence photomicrographs) of a water permeation test of Example 2.
FIG. 9 illustrates the results (fluorescence photomicrographs) of a water permeation test of Example 3.
FIG. 10 illustrates the results (fluorescence photomicrographs) of a water permeation test of Example 4.
FIG. 11 illustrates the results (fluorescence photomicrographs) of a water permeation test of Comparative Example 2.
FIG. 12 is a graph showing the relationship between time and fluorescence intensity analyzed on the basis of the results of the fluorescence photomicrographs of Example 2 and the results of the fluorescence photomicrographs of Comparative Example 2.
FIG. 13 is a graph showing the relationship between time and fluorescence intensity analyzed on the basis of the results of the fluorescence photomicrographs of Example 3 and the fluorescence photomicrographs of Comparative Example 2.
FIG. 14 is a graph showing the relationship between time and fluorescence intensity analyzed on the basis of the results of the fluorescence photomicrographs of Example 4 and the fluorescence photomicrographs of Comparative Example 2.
FIG. 15 illustrates the results (fluorescence photomicrographs) of a water permeation test of Example 5.
FIG. 16 illustrates the results (fluorescence photomicrographs) of a water permeation test of Comparative Example 3.
FIG. 17 is a graph showing the relationship between time and fluorescence intensity analyzed on the basis of the results of the fluorescence photomicrographs of Example 5 and the fluorescence photomicrographs of Comparative Example 3.

### Description of Embodiments

A water treatment flow channel member is made from a molded product obtained by molding a composition including a synthetic resin and a nanocarbon material into a predetermined shape. The water treatment flow channel member is used in a membrane separation device provided with a treatment membrane such as an RO membrane. The water treatment flow channel member is used, for example, as a mesh-like spacer (raw water spacer) interposed between a plurality of treatment membranes used in the membrane separation device.

Examples of the synthetic resin used in the water treatment flow channel member include thermoplastic resins and thermosetting resins. Note that for reasons such as excellent moldability and the ease of uniformly dispersing the nanocarbon material, the synthetic resin is preferably a thermoplastic resin.

Examples of thermosetting resins include phenol resins, epoxy resins, melamine resins, and urea resins.

Examples of thermoplastic resins include polyolefin resins such as polyethylene (PE), polypropylene (PP), and ethylene-propylene copolymers; acrylic resins; polyester resins such as polyethylene terephthalate (PET) and polybutylene terephthalate (PBT); polystyrene resins, acrylonitrile butadiene styrene (ABS) resins, modified polyphenylene ethers, polyphenylene sulfides, polyamides, polycarbonates, and polyacetals. These thermoplastic resins may be used alone or in a combination of two or more. Note that a polyolefin resin is preferable as the thermoplastic resin.

The nanocarbon material is an sp2 carbon-based carbon material, and includes carbon nanotubes, graphene, fullerene, and the like. These may be used alone or in a combination of two or more.

The carbon nanotubes have a structure in which a graphene sheet is wound in a cylindrical shape, and the diameter thereof is from several nm to several tens of nm, and the length thereof is from several tens of times to several thousands of times the diameter or greater. Carbon nanotubes are classified into single-walled carbon nanotubes in which the graphene sheet is substantially one layer, and multi-walled carbon nanotubes of two or more layers. Single-walled carbon nanotubes or multi-walled carbon nanotubes may be used as the carbon nanotubes as long as the object of the present invention is not hindered.

Graphene generally refers to a sheet of sp2-bonded carbon atoms with a thickness of one atom (single-walled graphene), but as long as the object of the present invention is not hindered, materials in which single-walled graphene is laminated may also be used as the graphene.

Fullerenes are carbon clusters having a closed shell structure, and ordinarily, the number of carbon atoms is an even number of from 60 to 130. Specific examples of fullerenes include higher-order carbon clusters having C60, C70, C76, C78, C80, C82, C84, C86, C88, C90, C92, C94, C96 or even more carbon atoms. As long as the object of the present invention is not hindered, fullerenes having different numbers of carbon atoms may be combined and used, or a single fullerene may be used.

Among the nanocarbon materials, carbon nanotubes are most preferable from perspectives such as procurement ease and versatility.

The blending ratio of the nanocarbon material to the synthetic resin is not particularly limited as long as the object of the present invention is not impaired, but for example, the nanocarbon material may be blended at a ratio of from 1 to 30 parts by mass per 100 parts by mass of the synthetic resin. For reasons such as ensuring fouling resistance while making use of the characteristics of the synthetic resin, which is the base material, the blended amount of the nanocarbon material is preferably 30 parts by mass or less, more preferably 20 parts by mass or less, and even more preferably 17.6 parts by mass or less per 100 parts by mass of the synthetic resin.

As long as the object of the present invention is not impaired, in addition to the synthetic resin and nanocarbon material described above, various additives such as UV inhibitors, colorants (pigments, dyes), thickeners, fillers, surfactants, and plasticizers may be appropriately blended in the composition that is used to mold the water treatment flow channel member.

The water treatment flow channel member is molded as appropriate using a predetermined mold. For example, when the synthetic resin is made from a thermoplastic resin, the water treatment flow channel member is injection molded as appropriate using a predetermined mold.

It is presumed that by blending a predetermined amount of nanocarbon material, the surface of the water treatment flow channel member becomes more hydrophilic due to the influence of the nanocarbon material. It is also presumed that by forming a thin film of water molecules on such a surface, various components (for example, organic components such as proteins, inorganic components such as calcium carbonate, natural organic matters (NOM) such as alginic acid, alginates, humic acid, and huminates, and organic-inorganic composite components) contained in a liquid contacting the water treatment flow channel member cannot approach and adhere to the surface of the water treatment flow channel member. Such a water treatment flow channel member excels in fouling resistance. Furthermore, the water treatment flow channel member exhibits high rigidity, and excels in properties such as a slidability and antibacterial action.

### Examples

The present invention will be described below in more detail based on examples. The present invention is not limited to these examples.

### Example 1

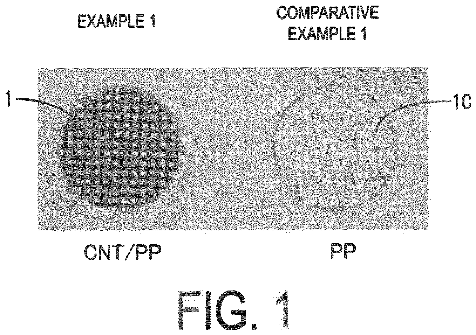

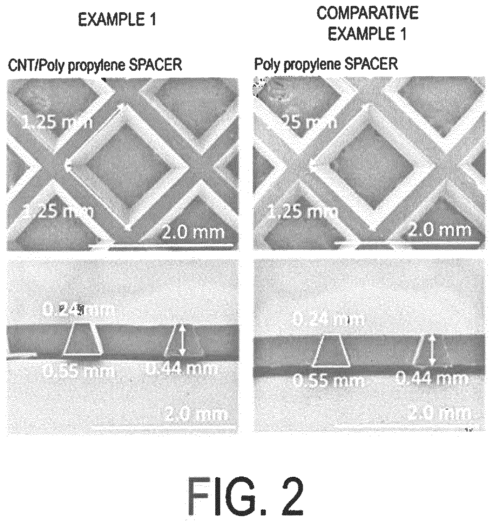

As illustrated in FIG. 1, a mesh-shaped spacer (water treatment flow channel member) having a circular shape from a plan view was prepared. A spacer 1 of Example 1 was made from a molded product obtained by, using a predetermined mold, molding a composition in which 18 parts by mass of carbon nanotubes were blended per 100 parts by mass of a polypropylene resin. Each dimension of the mesh portion of the spacer 1 in Example 1 was as illustrated in FIG. 2.

### Comparative Example 1

As illustrated in FIG. 1, a mesh-shaped spacer 1C having a circular shape from a plan view was prepared in the same manner as in Example 1. The spacer 1C of Comparative Example 1 was made from a molded product obtained by molding a polypropylene resin using the same mold as that of Example 1. Note that as illustrated in FIG. 2, each of the dimensions of the mesh portion of the spacer 1C of Comparative Example 1 was also the same as those in Example 1.

### Fouling Resistance Evaluation

### Immersion Test

The spacers 1 and 1C of Example 1 and Comparative Example 1 were suspended by a wire and immersed in a foul ant solution containing, at a concentration of 200 ppm, a bovine serum albumin (BSA) labeled with fluorescein isothiocyanate (FITC)(hereinafter, FITC-BSA).

### Fluorescence Microscope Observation

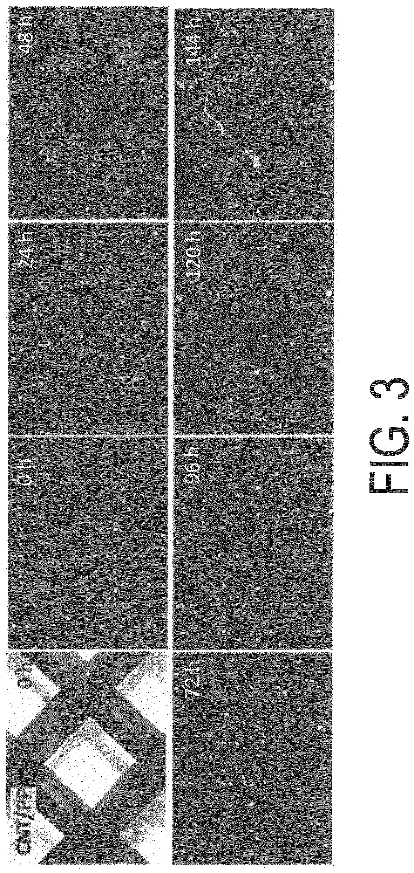

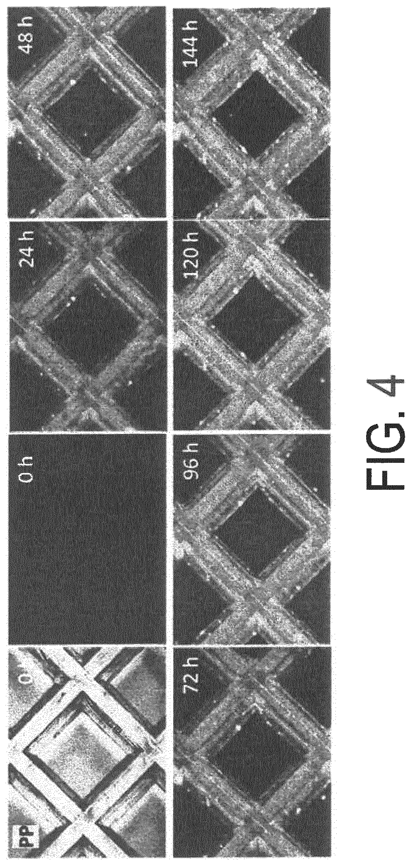

Each spacer 1 and 1C of Example 1 and Comparative Example 1 was observed with a fluorescence microscope at the start of the immersion test (0 hours) and after predetermined amounts of time (after 24 hours, after 48 hours, after 72 hours, after 96 hours, after 120 hours, and after 144 hours). The fluorescence photomicrographs of Example 1 are illustrated in FIG. 3, and the fluorescence photomicrographs of Comparative Example 1 are illustrated in FIG. 4.

As illustrated in FIG. 3, it was confirmed that almost no FITC-BSA (one example of a protein) adhered to the spacer 1 of Example 1. It is speculated that the reason for this is that the inclusion of carbon nanotubes increases the hydrophilicity of the surface of the spacer 1, a thin film of water molecules is formed on the surface thereof, and thereby the FITC-BSA does not approach and adhere to the surface of the spacer 1. On the other hand, as illustrated in FIG. 4, it was confirmed that the FITC-BSA began to gradually adhere to and be deposited on the spacer 1C of Comparative Example 1 after around 24 hours.

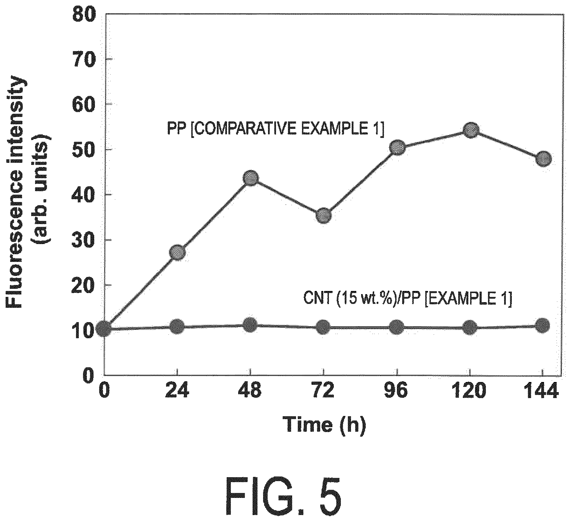

FIG. 5 is a graph showing the relationship between time and fluorescence intensity analyzed on the basis of the results of the fluorescence photomicrographs of Example 1 and the results of the fluorescence photomicrographs of Comparative Example 1. The horizontal axis of the graph in FIG. 5 represents the elapsed time (hours) of the immersion test, and the vertical axis represents the fluorescence intensity. Also here, all of the fluorescence photomicrographs of each time illustrated in FIGS. 3 and 4 were set as the analysis range.

As shown in FIG. 5, it was confirmed that with the spacer 1 of Example 1, even after the passage of 144 hours, almost no change in fluorescence intensity compared to that at the start of the test was observed. In contrast, with the spacer 1C of Comparative Example 1, it was confirmed that the fluorescence intensity gradually increased over time.

### Example 2

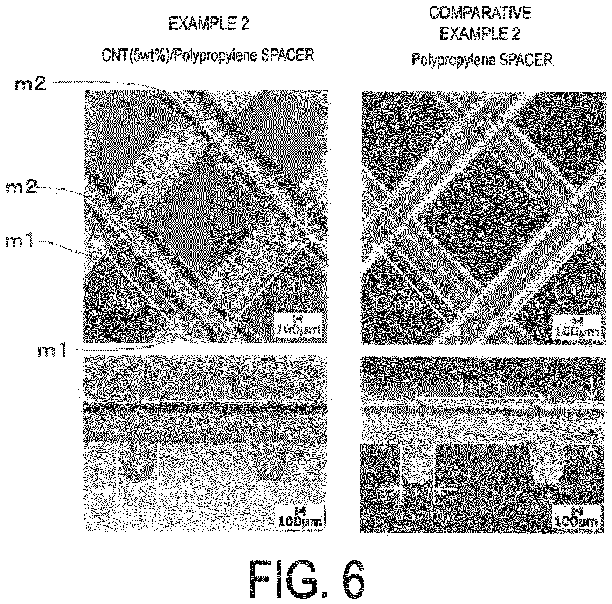

A mesh-shaped spacer (water treatment flow channel member) having a circular shape similar to that of Example 1 from a plan view, and having a mesh portion configuration like that illustrated in FIG. 6 was prepared. The spacer of Example 2 was made from a molded product obtained by, using a predetermined mold, molding a composition in which 5.3 parts by mass of carbon nanotubes (CNT) (CNT: 5 mass%) were blended per 100 parts by mass of a polypropylene resin. Note that, unlike Example 1, the mesh portion of the spacer of Example 2 had a shape in which a plurality of upper side line sections m2 aligned in parallel to each other overlapped a plurality of lower side line sections m1 aligned in parallel to each other, such that the upper side line sections m2 intersected the lower side line sections m1 in a plan view. Each dimension of the mesh portion of the spacer in Example 2 was as illustrated in FIG. 6.

### Example 3

A spacer (water treatment flow channel member) of Example 3 was produced in the same manner as in Example 2 with the exception that the blended amount of carbon nanotubes (CNT) per 100 parts by mass of the polypropylene resin was changed to 11.1 parts by mass (CNT: 10 mass%).

### Example 4

A spacer (water treatment flow channel member) of Example 4 was produced in the same manner as in Example 2 with the exception that the blended amount of carbon nanotubes (CNT) per 100 parts by mass of the polypropylene resin was changed to 17.6 parts by mass (CNT: 15 mass%).

### Comparative Example 2

A spacer of Comparative Example 2 made from a polypropylene resin was prepared in the same manner as in Example 2 with the exception that carbon nanotubes (CNT) were not blended. Note that as illustrated in FIG. 6, each of the dimensions of the mesh portion of the spacer of Comparative Example 2 was also the same as those in Example 2.

### Evaluation of Fouling Resistance to Organic Components

### Water Permeation Test

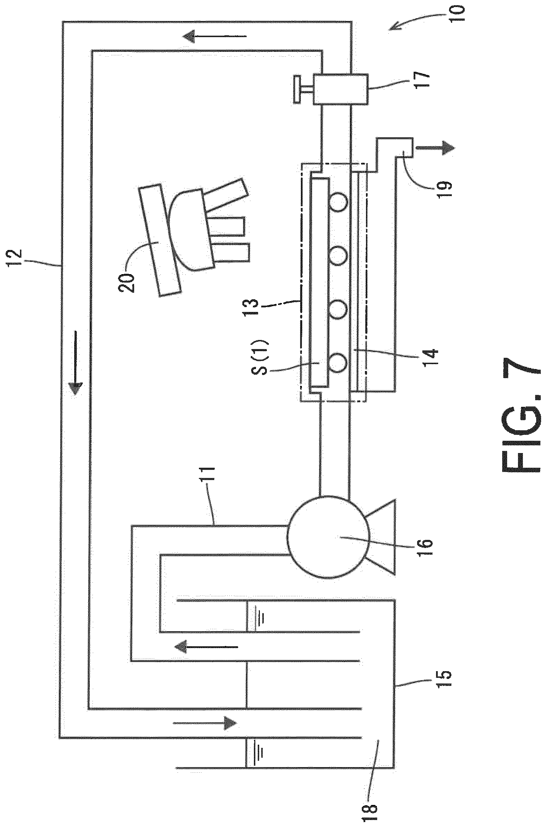

The foreign substance removability of each of the members of Examples 2 to 4 and Comparative Example 2 was evaluated using a cross-flow filtration type testing apparatus 10 illustrated in FIG. 7. First, the testing apparatus 10 will be described with reference to FIG. 7.

FIG. 7 is a schematic view of the cross-flow filtration type testing apparatus 10. The testing apparatus 10 includes an upstream side piping section 11, a downstream side piping section 12, a filtration unit 13, a reverse osmosis membrane 14, a recovery container 15, a pump 16, a valve 17, a permeate discharge section 19, and the like.

The filtration unit 13 is a part that filters a to-be-filtered solution 18 using the reverse osmosis membrane 14 while accommodating a test piece S made from the member of Example 2 or like, the test piece S being placed on a commercially available reverse osmosis membrane 14 (trade name "SWC5", available from Nitto Denko Corporation) such that the to-be-filtered solution 18 flowed along the surface of the test piece S. A 10 mmol/L NaCl aqueous solution containing, at a concentration of 100 ppm, bovine serum albumin (BSA) labeled with fluorescein isothiocyanate (FITC) (hereinafter, FITC-BSA) was used as the to-be-filtered solution 18.

The permeate discharge section 19 is a part that discharges, to the outside, the permeate that has passed through the reverse osmosis membrane 14, and the permeate discharged therefrom is collected by a collection container (not illustrated).

The to-be-filtered solution 18 contained in the recovery container 15 is supplied to the filtration unit 13 through the upstream side piping section 11. The upstream side piping section 11 connects the filtration unit 13 and the recovery container 15. Further, the pump 16 for feeding the to-be-filtered solution 18 to the filtration unit 13 is disposed midway in the upstream side piping section 11. In addition, the downstream side piping section 12 connects the filtration unit 13 and the recovery container 15, and the to-be-filtered solution 18 discharged from the filtration unit 13 passes through the downstream side piping section 12, and is returned once again to the recovery container 15. Note that the valve 17 is provided midway in the downstream side piping section 12, and the flow rate of the to-be-filtered solution 18 circulating through the downstream side piping section 12 and the like is regulated by opening and closing the valve 17.

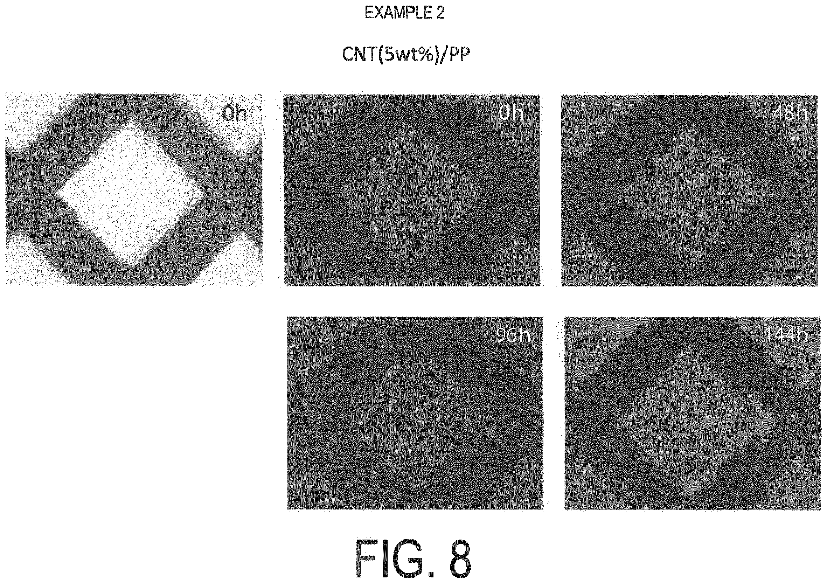

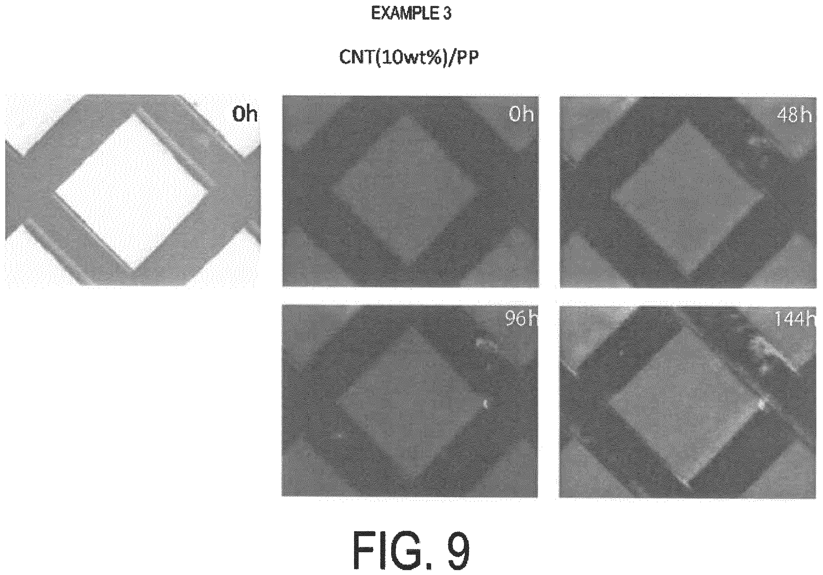

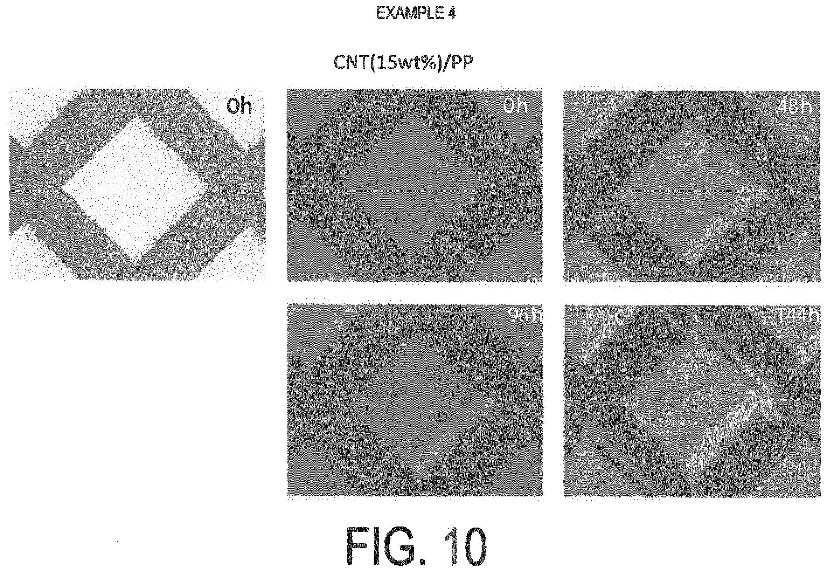

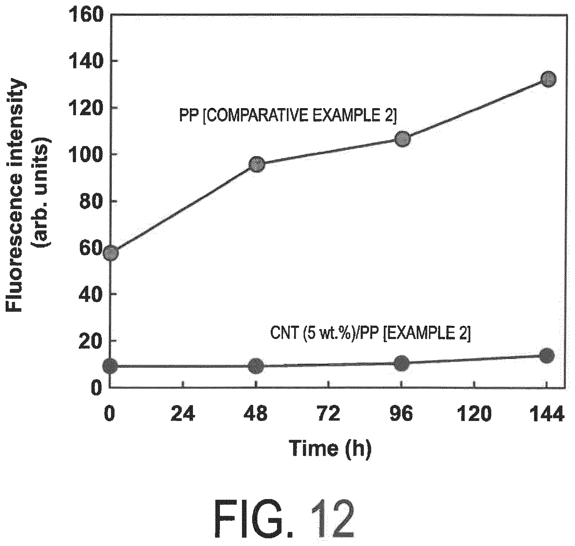

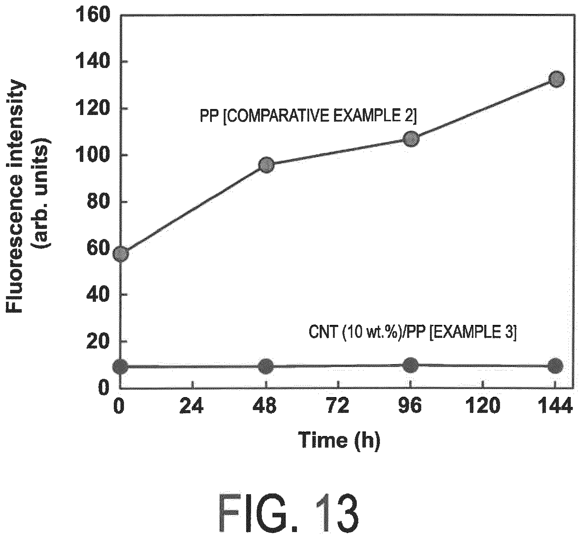

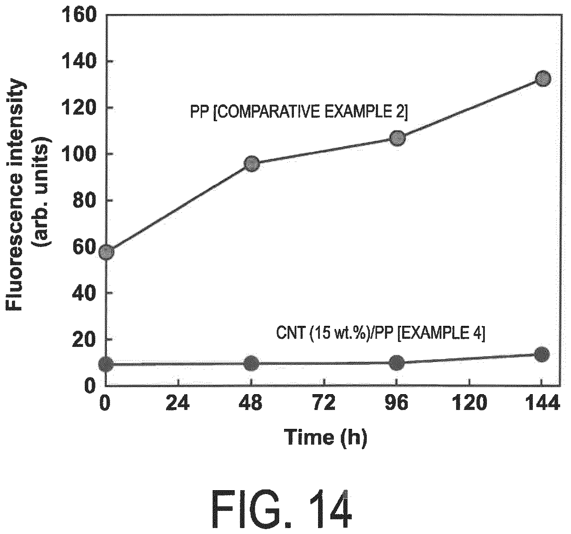

A filtration test (water permeation test) in which the to-be-filtered solution 18 was continuously filtered for 144 hours was performed using the testing apparatus 10. The feed pressure of the to-be-filtered solution 18 was set to 0.7 MPa, and the flow rate of the to-be-filtered solution 18 was set to 500 ml/min. In addition, at the start (0 hours) of this type of filtration test (water permeation test), and at 48 hours, 96 hours, and 144 hours after starting the test, foreign substance (FITC-BSA) adhering to the surface of the test piece S placed on top of the reverse osmosis membrane 14 was confirmed using a fluorescence microscope 20. The results of each fluorescence photomicrograph of Examples 2 to 4 and Comparative Example 2 are presented in FIGS. 8 to 11. In addition, FIGS. 12 to 14 present graphs showing the relationship between time and the fluorescence intensity of each of Examples 2 to 4, analyzed on the basis of the results of each of the fluorescence photomicrographs and the results of the fluorescence photomicrographs of Comparative Example 2. Note that the horizontal axis of the graphs of FIGS. 12 to 14 represents the elapsed time (hours) of the immersion test, and the vertical axis represents the fluorescence intensity. Also here, all of the fluorescence photomicrographs of each time illustrated in FIGS. 8 to 11 were set as the analysis range.

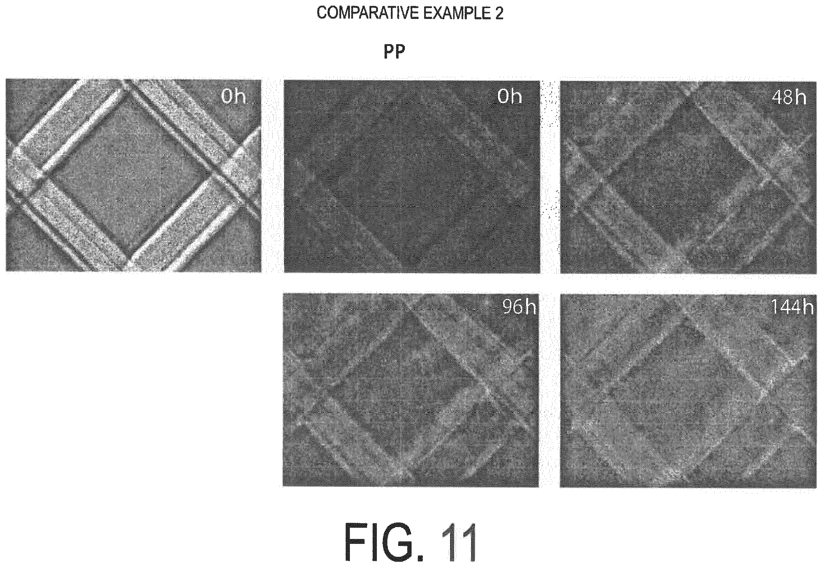

As illustrated in FIGS. 8 to 10 and FIGS. 12 to 14, it was confirmed that even in water permeation tests using organic components, almost no FITC-BSA adhered to the spacers of Examples 2 to 4. It is speculated that the reason for this is that the inclusion of carbon nanotubes (CNT) increases the hydrophilicity of the surface of the spacer, a thin film of water molecules is formed on the surface thereof, and thereby the FITC-BSA does not approach and adhere to the surface of the spacer. In contrast, as illustrated in FIG. 11, and the like, it was confirmed that in the water permeation test, the FITC-BSA began to gradually adhere to and be deposited on the spacer of Comparative Example 2 after around 48 hours, and the fluorescence intensity gradually increased.

### Example 5

A spacer with the same configuration as that of Example 4 was prepared as the spacer of Example 5. In other words, the spacer of Example 5 was made from a molded product of a composition in which 100 parts by mass of a polypropylene resin was used as a base polymer, and carbon nanotubes were blended therewith at a ratio of 17.6 parts by mass (CNT: 15 mass%).

### Comparative Example 3

A spacer with the same configuration as that of Comparative Example 2 was prepared as the spacer of Comparative Example 3. In other words, the spacer of Comparative Example 3 was made from a molded product of a polypropylene resin not containing carbon nanotubes.

### Evaluation of Fouling Resistance to Inorganic Components

### Water Permeation Test

The fouling resistance to inorganic components was evaluated using the testing apparatus 10 in substantially the same manner as the water permeation test described above, with the exception that as the to-be-filtered solution 18, a 10 mmol/L NaCl aqueous solution containing calcium chloride (CaCl₂) at a concentration of 1000 ppm, and sodium hydrogen carbonate (NaHCO₃) at a concentration of 100 ppm were used in place of the 10 mmol/L NaCl aqueous solution containing FITC-BSA. Similar to the water permeation test described above, the feed pressure of the to-be-filtered solution 18 was set to 0.7 MPa, and the flow rate of the to-be-filtered solution 18 was also similarly set to 500 ml/min.

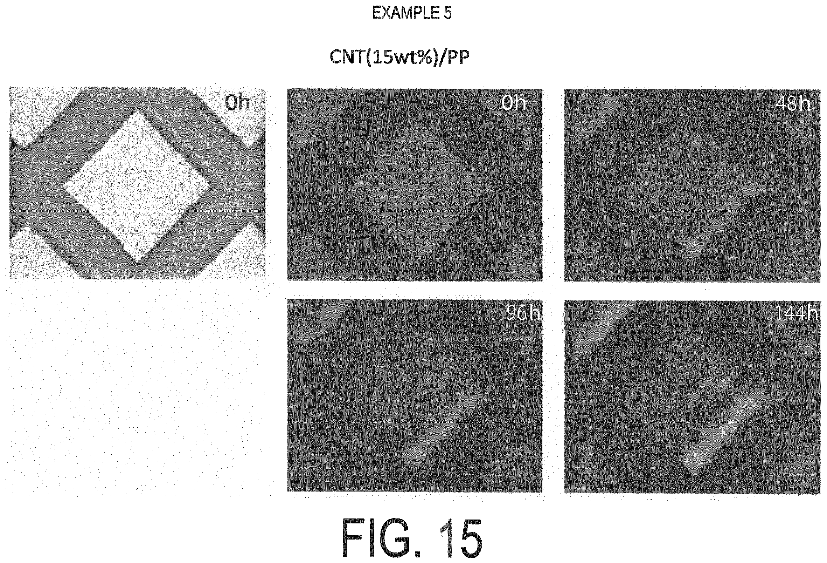

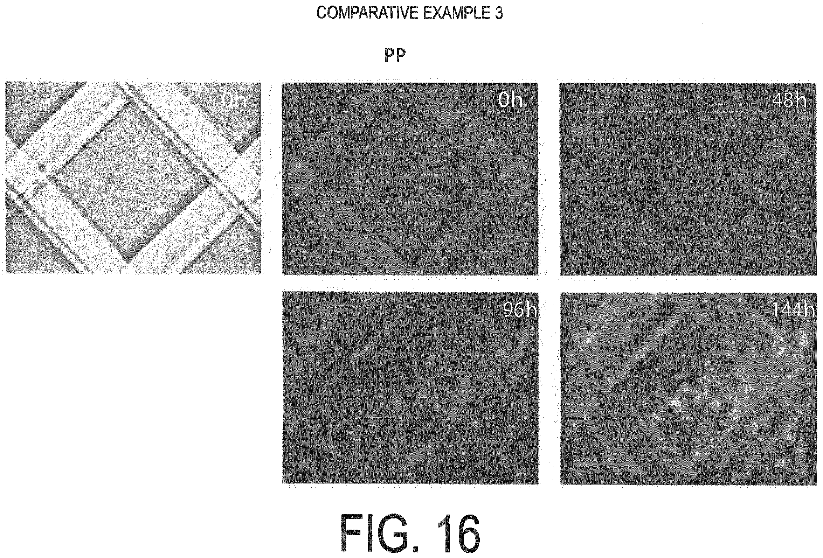

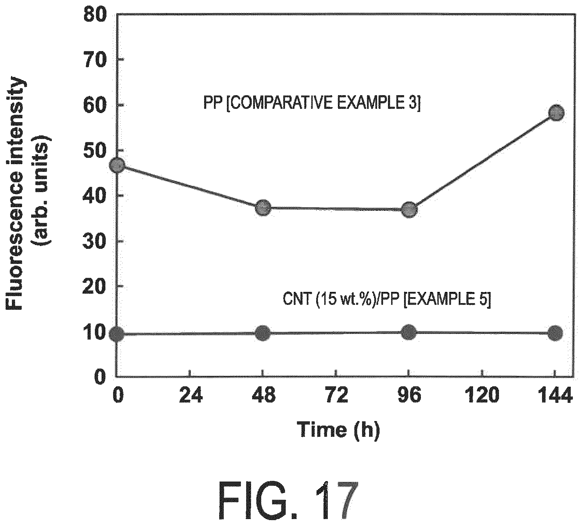

In addition, at the start (0 hours) of this type of filtration test (water permeation test), and at 48 hours, 96 hours, and 144 hours after starting the test, foreign substance (a calcium component) adhering to the surface of the test piece S placed on top of the reverse osmosis membrane 14 was confirmed using the fluorescence microscope 20. Note that when the test piece S was observed at a predetermined time, an aqueous fluorescent coloring solution containing a fluorescent component (Calcein) was supplied instead of the NaCl aqueous solution containing calcium chloride or the like, and the fouling component was fluorescently colored. After observation, the NaCl aqueous solution containing calcium chloride or the like was again supplied in place of the aqueous fluorescent coloring solution. The results of each fluorescence photomicrograph of Example 5 and Comparative Example 3 are presented in FIGS. 15 and 16. Additionally, FIG. 17 is a graph showing the relationship with fluorescence intensity analyzed on the basis of the results of the fluorescence photomicrographs of Example 5 and the fluorescence photomicrographs of Comparative Example 3.

As illustrated in FIGS. 15 and 17, in water permeation tests using inorganic components, it was confirmed that almost no calcium component adhered to the spacer of Example 5. It is speculated that the reason for this is that the inclusion of carbon nanotubes (CNT) increases the hydrophilicity of the surface of the spacer, a thin film of water molecules is formed on the surface thereof, and thereby the calcium component does not approach and adhere to the surface of the spacer. In contrast, as illustrated in FIGS. 16 and 17, it was confirmed that in the water permeation test using inorganic components, the calcium components began to gradually adhere to and be deposited on the spacer of Comparative Example 3 after around 48 hours, and the fluorescence intensity gradually increased.

### Reference Signs List

1: Water treatment flow channel member (spacer)

## Claims

1. A water treatment flow channel member comprising a molded product containing a synthetic resin and a nanocarbon material.

2. The water treatment flow channel member according to claim 1, wherein the nanocarbon material includes carbon nanotubes.

3. The water treatment flow channel member according to claim 1 or 2, wherein the synthetic resin includes a thermoplastic resin.

4. The water treatment flow channel member according to claim 3, wherein the thermoplastic resin includes polypropylene.

5. The water treatment flow channel member according to any one of claims 1 to 4, wherein a blending ratio of the nanocarbon material is from 1 to 30 parts by mass per 100 parts by mass of the synthetic resin.
